# EUROPEAN PATENT APPLICATION

(11) **EP 4 590 003 A1**
(43) Date of publication of application: **23.07.2025**
(21) Application number: 23875236.4
(22) Date of filing: 05.10.2023
(51) Int. Cl.: H04W 8/02, H04W 60/04, H04L 41/0894

(54) **METHOD AND APPARATUS FOR PROVIDING UE POLICY INFORMATION IN WIRELESS COMMUNICATION SYSTEM**

(30) Priority: 07.10.2022 KR 20220129095
(71) Applicant: Samsung Electronics Co., Ltd., Suwon-si, Gyeonggi-do 16677 (KR)
(72) Inventor: KIM, Dongyeon, Suwon-si Gyeonggi-do 16677 (KR); LEE, Jicheol, Suwon-si Gyeonggi-do 16677 (KR)
(74) Representative: Gulde & Partner
(86) International application number: PCT/KR2023/015335
(87) International publication number: WO 2024/076174

(57) **Abstract**

The present disclosure relates to a method and apparatus for providing UE policy information in a wireless communication system. According to an embodiment of the present disclosure, the method by which a first AMF managing the mobility of a UE provides UE policy information in a wireless communication system comprises, in case that a situation of AMF relocation occurs, receiving, by the first AMF, a registration request from the UE during the AMF relocation, receiving, by the first AMF, UE policy-related information from a second AMF managing mobility of the UE before the AMF relocation, transmitting, by the first AMF, a request message comprising information indicating the AMF relocation to a first policy control function (PCF) managing the UE policy information after the AMF relocation, receiving, by the first AMF, a response message comprising the UE policy information to be applied to the UE after the AMF relocation from the first PCF, and transmitting, by the first AMF, the UE policy information to the UE.

## Description

### [Technical Field]

The disclosure relates to a method and an apparatus for providing a UE policy in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

To meet the demand for wireless data traffic having increased since deployment of 4G communication systems, efforts have been made to develop an improved 5G or pre-5G communication system. Therefore, the 5G or pre-5G communication system is also called a "beyond 4G network" communication system or a "post LTE" system. The 5G system specified by the 3GPP is called a "new radio (NR)" system.

The 5G communication system is considered to be implemented in ultrahigh frequency (mmWave) bands, (e.g., 60GHz bands) so as to accomplish higher data rates. To decrease propagation loss of the radio waves and increase the transmission distance in the ultrahigh frequency bands, beamforming, massive multiple-input multiple-output (massive MIMO), full dimensional MIMO (FD-MIMO), array antenna, analog beam forming, large scale antenna techniques have been discussed in 5G communication systems and applied to the NR system.

In addition, in the 5G communication system, technical development for system network improvement is under way based on evolved small cells, advanced small cells, cloud radio access networks (cloud RANs), ultra-dense networks, device-to-device (D2D) communication, wireless backhaul, moving network, cooperative communication, coordinated multi-points (CoMPs), reception-end interference cancellation, and the like.

In the 5G system, hybrid FSK and QAM modulation (FQAM) and sliding window superposition coding (SWSC) as an advanced coding modulation (ACM) scheme, and filter bank multi carrier (FBMC), non-orthogonal multiple access (NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through a connection with a cloud server, etc. has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have recently been researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply the 5G communication system to IoT networks. For example, technologies such as a sensor network, machine type communication (MTC), and machine-to-machine (M2M) communication are implemented by beamforming, MIMO, and array antenna techniques that are 5G communication technologies. Application of a cloud radio access network (cloud RAN) as the above-described big data processing technology may also be considered an example of convergence of the 5G technology with the IoT technology.

### [Detailed Description of the Invention]

### [Technical Problem]

All of a 5GS, which is being commercialized at present, and LTE and LTE-A systems, which currently provide a mobile communication service, are mobile communication systems providing a packet-based service. The 5GS is being developed to support mutual interworking with an evolved packet system (EPS) based on LTE and LTE-A. In the 5G system, a 5G core (5GC) network may provide UE policy information to a user equipment (UE).

In the current 5G system, when an access and mobility management function (AMF) that manages the mobility of the UE is changed during the 5GS registration or handover procedure of the UE, a policy control function (PCF) that was providing UE policy information to the UE may also be changed. In this case, the UE does not have to provide a new AMF and a new PCF with information related to the UE policy that the UE installed and stored in the device through the previous registration and/or other procedures. Accordingly, the new PCF may intend to perform the initial registration procedure even though the corresponding UE is not performing the initial registration procedure, or may consider that the UE has no UE policy information previously installed and stored and determine a UE policy. As a result, there may be a problem that the UE receives incorrect policy information from the network that does not take into account UE capabilities and resources. Meanwhile, in the network, there may be a problem of providing incorrect policy information to the UE that does not take into account the UE capabilities and resources or consuming network resources.

Accordingly, the disclosure provides a method and an apparatus for efficiently providing UE policy information in a wireless communication system.

In addition, the disclosure provides a method and an apparatus for establishing UE policy association according to AMF location including PCF changes in a wireless communication system.

### [Technical Solution]

According to an embodiment of the disclosure, a method of providing UE policy information by a first access and mobility management function (AMF) configured to manage mobility of a UE in a wireless communication system compriese, in case that a situation of AMF relocation occurs, receiving, by the first AMF, a registration request from the UE during the AMF relocation, receiving, by the first AMF, UE policy-related information from a second AMF managing mobility of the UE before the AMF relocation, transmitting, by the first AMF, a request message including information indicating the AMF relocation to a first policy control function (PCF) managing the UE policy information after the AMF relocation, receiving, by the first AMF, a response message including the UE policy information to be applied to the UE after the AMF relocation from the first PCF, and transmitting, by the first AMF, the UE policy information to the UE.

According to an embodiment of the disclosure, a first access and mobility management function (AMF) configured to manage mobility of a UE in a wireless communication system includes a transceiver and a processor configured to, in case that a situation of AMF relocation occurs, receive, by the first AMF, a registration request from the UE through the transceiver during an AMF relocation, receive, by the first AMF, UE policy-related information from a second AMF managing mobility of the UE before the AMF relocation through the transceiver, transmit, by the first AMF, a request message including information indicating the AMF relocation to a first policy control function (PCF) managing the UE policy information after the AMF relocation through the transceiver, receive, by the first AMF, a response message including the UE policy information to be applied to the UE after the AMF relocation from the first PCF through the transceiver, and transmit, by the first AMF, the UE policy information to the UE through the transceiver.

### [Brief Description of Drawings]

FIG. 1 is a diagram illustrating a network structure and an interface of a wireless communication system according to an embodiment of the disclosure,
FIG. 2 is a diagram illustrates a roaming (local breakout) structure of the wireless communication system according to an embodiment of the disclosure,
FIG. 3 is a diagram illustrating a roaming (home routing) structure of the wireless communication system according to an embodiment of the disclosure,
FIGS. 4, 5, 6, 7, 8, 9, 10, 11, and 12 are diagrams illustrating UE policy association establishment methods according to AMF relocation including a PCF change in the wireless communication system according to various embodiments of the disclosure.
FIG. 13 is a diagram illustrating an example of a configuration of a network entity in the wireless communication system according to an embodiment of the disclosure.

### [Mode for Carrying out the Invention]

Hereinafter, exemplary embodiments of the disclosure will be described in detail with reference to the accompanying drawings. It should be noted that, in the accompanying drawings, the same or like elements are designated by the same or like reference signs as much as possible. Also, it should be noted that the following accompanying drawings of the disclosure are provided to help understanding of the disclosure and the disclosure is not limited to configurations or arrangements illustrated in the drawings of the disclosure. In addition, a detailed description of known functions or configurations that may make the subject matter of the disclosure unclear will be omitted. It should be noted that, in the following description, only parts required to understand operations according to various embodiments will be described and a description of the other parts will be omitted so as not to make the subject matter of the disclosure obscure. Furthermore, various embodiments of the disclosure will be described using terms used in some communication standards (e.g., the 3rd generation partnership project (3GPP)), but they are for illustrative purposes only. Various embodiments of the disclosure may be easily applied to other communication systems through modifications.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

As used herein, each of such phrases as "A and/or B," "A or B," "at least one of A and B," "at least one of A or B," "A, B, or C," "at least one of A, B, and C," and "at least one of A, B, or C," may include all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order).

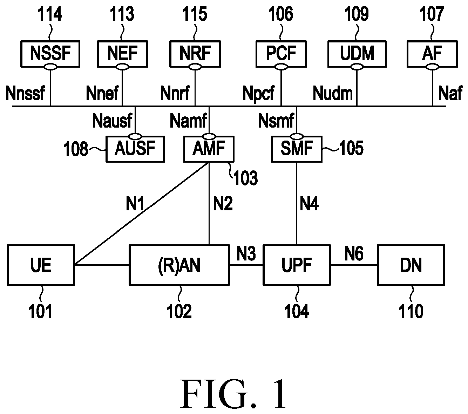

In the disclosure, a network technology may be referred to by the standard (for example, TS 23.501, TS 23.502, TS 23.503, and the like) defined by the international telecommunication union (ITU) or the 3GPP, and elements included in the network architecture of FIG. 1 described below may be physical entities, software performing individual functions, or hardware combined with software. In the drawings, reference numerals indicated by Nx such as N1, N2, N3,... represent known interfaces between NFs in the 5G core network (CN).

FIG. 1 illustrates the network structure and interfaces of the 5G system according to an embodiment of the disclosure.

Network entities included in the network structure of the 5G system of FIG. 1 may include network functions (NFs) according to system implementation.

Referring to FIG. 1, the network structure of the 5G system may include various network entities. For example, the 5G system may include an authentication server function (AUSF) 108, an AMF 103, a session management function (SMF) 105, a policy control function (PCF) 106, an application function (AF) 107, a unified data management (UDM) 109, a data network (DN) 110, a network exposure function (NEF) 113, a network slicing selection function (NSSF) 114, an edge application service domain repository (EDR) 113, an edge application server (EAS) (not shown), an EAS discovery function (EASDF) (not shown), a user plane function (UPF) 104, a (radio) access network ((R)AN) 102, and a terminal, that is, a user equipment (UE) 101.

Respective NSFs of the 5G system 100 support the following functions.

The AUSF 108 processes and stores data for authenticating the UE 101.

The AMF 103 may provide a function for access in units of UEs and mobility management and may be connected to one AMF basically per UE. Specifically, the AMF 103 supports functions such as signaling between core network (CN) nodes for movement between 3GPP access networks, termination of a radio access network (RAN) control plane (CP) interface (that is, an N2 interface), termination of non-access stratum (NAS) signaling (N1), NAS signaling security (NAS ciphering and integrity protection), AS security control, registration management (registration area management), connection management, idle mode UE reacheability (including control and performance of paging re-transmission), mobility management control (subscription and policy), supporting of intra-system mobility and inter-system mobility, supporting of network slicing, SMF selection, lawful intercept (LI) (for an AMF event and interface to an LI system), provision of transmission of a session management (SM) message between the UE and the SMF, a transparent proxy for session management (SM) message routing, access authentication, access authorization including roaming authority check, provision of transmission of an SMS message between the UE and a short message service function (SMSF), a security anchor function (SAF), and/or security context management (SCM). Some or all of the functions of the AMF 103 may be supported within a single instance of one AMF.

The DN 110 is, for example, operator service, Internet access, or 3^{rd}-party service. The DN 110 transmits a downlink protocol data unit (PDU) to the UPF 104 or receives a PDU transmitted from the UE 101 from the UPF 104.

The PCF 106 receives information on the packet flow from an application server and provides a function of determining a policy such as mobility management and session management. Specifically, the PCF 106 supports a function of supporting a unified policy framework for controlling network operation, providing a policy rule to allow control plane function(s) (for example, the AMF, the SMF, and the like) to try the policy rule, and implementing a front end for accessing relevant subscription information to determine a policy within a user data repository (UDR).

The SMF 105 may provide a session management function, and respective sessions may be managed by different SMFs when the UE 101 has a plurality of sessions. Specifically, the SMF 105 supports functions of managing a session (for example, establishing, modifying, and releasing a session including maintenance of a tunnel between nodes of the UPF 104 and the (R)AN 102), allocating and managing a UE IP address (selectively including authentication), selecting and controlling a user plane (UP) function, configuring traffic steering for routing traffic from the UPF 104 to a proper destination, termination of an interface for policy control functions, trying a control part of a policy and quality of service (QoS), lawful intercept (LI) (for an SM event and an interface for an LI system), termination of an SM part of a NAS message, downlink data notification, transferring access network (AN)-specific SM information to the (R)AN 102 through N2 via an initiator (the AMF 103) , determining a session and service continuity (SSC) mode of a session, and roaming. Some or all of the functions of the SMF 105 may be supported within a single instance of one SMF.

The UDM 109 stores the user's subscription data, policy data, and the like. The UDM 109 includes two parts, that is, an application front end (FE) (not illustrated) and a user data repository (UDR) (not illustrated).

The front end (FE) (not illustrated) includes a UDM FE responsible for location management, subscription management, and credential processing, and a PCG responsible for policy control. The UDR stores data required for functions provided by the UDM-FE and a policy profile required by the PCF. Data stored in the UDR includes policy data and user subscription data including a subscription identifier, security credential, access and mobility-related subscription data, and session-related subscription data. The UDM-FE supports functions, such as access to subscription information stored in the UDR, authentication credential processing, user identification handling, access authentication, registration/mobility management, subscription management, and SMS management.

The UPF 104 may transfer a downlink PDU, which is received from the DN 110, to the UE 101 via the (R)AN 102 and transfers an uplink PDU, which is received from the UE 101, to the DN 110 via the (R)AN 102. Specifically, the UPF 104 supports functions, such as an anchor point for intra/inter RAT mobility, an external PDU session point of interconnection to a data network, packet routing and forwarding, a user plane part for packet inspection and policy rule execution, lawful interception, traffic usage reporting, an uplink classifier for supporting routing of a traffic flow to a data network, a branching point for supporting a multi-home PDU session, QoS handling (e.g., packet filtering, gating, and uplink/downlink rate execution) for a user plane, uplink traffic verification (service data flow (SDF) mapping between an SDF and a QoS flow), transport level packet marking within the uplink and downlink, downlink packet buffering, and a downlink data notification triggering function. Some or all of the functions of the UPF 104 may be supported within a single instance of one UPF.

The AF 107 interworks with a 3GPP core network in order to provide services (e.g., supporting functions, such as an application influence on traffic routing, access to network capability exposure, and interworking with a policy framework for policy control).

The (R)AN 102 collectively refers to a new radio access network supporting both an evolved E-UTRA and new radio (NR) access technologies (e.g., gNB) which are evolved versions of the 4G radio access technology.

The gNB supports functions, such as functions for radio resource management (i.e., radio bearer control, radio admission control, connection mobility control, and dynamic allocation of resources (i.e., scheduling) to the UE in an uplink/downlink), Internet protocol (IP) header compression, encryption and integrity protection of a user data stream, selection of the AMF upon attachment of the UE when routing to the AMF has not been determined based on information provided to the UE, user plane data routing to the UPF(s), control plane information routing to the AMF, connection setup and release, paging message scheduling and transmission (generated from the AMF), system broadcast information scheduling and transmission (generated from the AMF or operation and maintenance (O&M)), measurement and measurement report configuration for mobility and scheduling, transport level packet marking in the uplink, session management, support of network slicing, QoS flow management and mapping to a data radio bearer, support of the UE that is in an inactive mode, a distribution function of a NAS message, a NAS node selection function, radio access network sharing, dual connectivity, and tight interworking between the NR and the E-UTRA.

A UE 101 may be referred to as the terms "terminal", "mobile equipment (ME)", "mobile station (MS)", etc. In addition, the user equipment may be a portable device, such as a laptop, a mobile phone, a personal digital assistant (PDA), a smartphone, or a multimedia device, or may be a non-portable device, such as a personal computer (PC) or a vehicle-mounted device.

The NEF 111 provides means for safely exposing services and capabilities provided by 3GPP network functions, for example, for third parties, internal exposure/re-exposure, application functions, and edge computing. The NEF 111 receives information from other NF(s) (based on the exposed capability(capabilities) of other NF(s)). As a data storage network function, the NEF 111 may store information received as structured data by using a standardized interface. The stored information may be re-exposed to other NF(s) and AF(s) by the NEF 111, and may be used for other purposes, such as analysis.

The NRF 115 supports a service discovery function. The NRF 115 receives an NF discovery request from an NF instance, and provides information of a discovered NF instance to the NF instance. In addition, the NRF 115 maintains available NF instances and services supported by the available NF instances.

For convenience of description, FIG. 1 illustrates a reference model for a case where the UE 101 accesses one DN 110 by using one PDU session, but the disclosure is not limited thereto.

The UE 101 may concurrently access, for example, two (i.e., local and central) data networks by using multiple PDU sessions. In this case, two SMFs may be selected for different PDU sessions. Each SMF may have capability to control both local and central UPFs within a PDU session.

In addition, the UE 101 may concurrently access, for example, two (i.e., local and central) data networks provided within a single PDU session.

The NSSF 114 may select a set of network slice instances serving the UE 101. In addition, the NSSF 114 may determine allowed network slice selection assistance information (NSSAI), and perform mapping to subscribed single-network slice selection assistance information (S-NSSAI) when necessary. In addition, the NSSF 114 may determine configured NSSAI, and perform mapping to the subscribed S-NSSAI when necessary. In addition, the NSSF 114 may determine an AMF set used to serve the UE, or may determine a list of candidate AMFs by asking the NRF 115 according to a configuration.

The NRF 115 supports a service discovery function. The NRF 115 receives an NF discovery request from an NF instance, and provides information of a discovered NF instance to the NF instance. In addition, the NRF 115 maintains available NF instances and services supported by the available NF instances.

In 3GPP systems, conceptual links connecting NFs in the 5G system are defined as reference points. In the following, reference points included in the 5G system architecture described in FIG. 1 are provided below.
- N1: a reference point between a UE and an AMF
- N2: a reference point between an (R)AN and an AMF
- N3: a reference point between an (R)AN and a UPF
- N4: a reference point between an SMF and a UPF
- N5: a reference point between a PCF and an AF
- N6: a reference point between a UPF and a data network
- N7: a reference point between an SMF and a PCF
- N8: a reference point between a UDM and an AMF
- N9: a reference point between two core UPFs
- N10: a reference point between a UDM and an SMF
- N11: a reference point between an AMF and an SMF
- N12: a reference point between an AMF and an AUSF
- N13: a reference point between a UDM and an authentication server function (AUSF)
- N14: a reference point between two AMFs
- N15: a reference point between a PCF and an AMF for a non-roaming scenario, and a reference point between a PCF and an AMF in a visited network for a roaming scenario

In the following descriptions, a UE may refer to the UE 101, and the terms UE and terminal may be used interchangeably. In this case, unless specifically defined additionally, a UE may be understood as the UE 101.

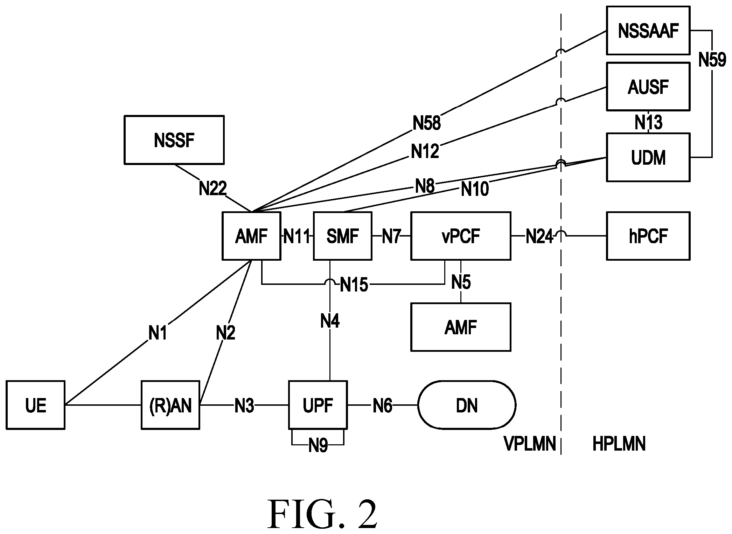

FIG. 2 is a diagram illustrating a 5G system roaming (local breakout) structure according to one embodiment of the disclosure. Since the basic functions of the NFs illustrated in FIG. 2 are the same as the corresponding NFs in FIG. 1, description of the basic functions of the NFs illustrated in FIG. 2 will be omitted.

The roaming structure of FIG. 2 illustrates a local breakout (LBO) scenario in which data traffic of the UE is routed at a visited network (visited PMMN (VPLMN) without passing through a home public land mobile network (HPLMN). The hPCF, which is the PCF of the home network, and the vPCF, which is the PCF of the visited network, may communicate with each other through a reference point N24.

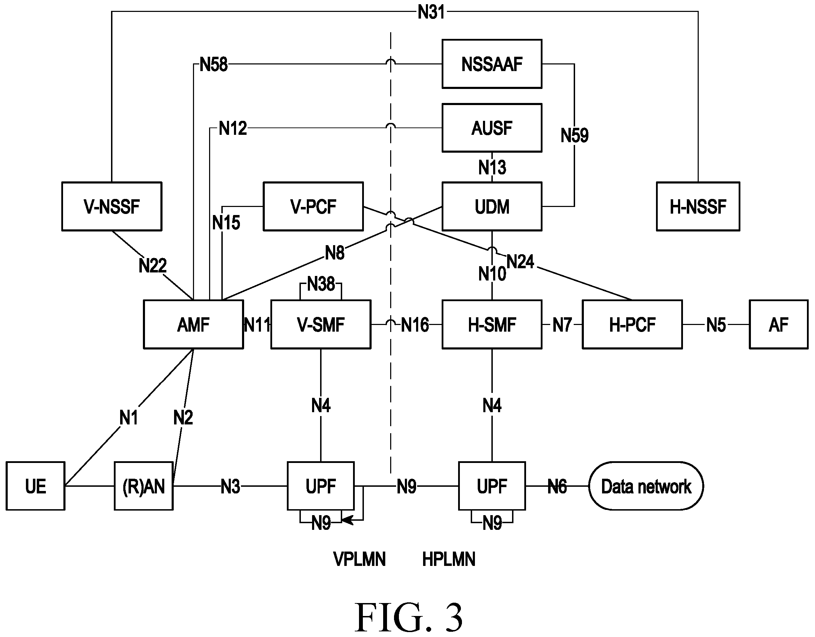

FIG. 3 is a diagram illustrating a 5G system roaming (home routing) structure according to an embodiment of the disclosure. Since the basic functions of the NFs illustrated in FIG. 3 are the same as the corresponding NFs in FIG. 1, description of the basic functions of the NFs illustrated in FIG. 3 will be omitted. The roaming structure of FIG. 3 illustrates a home routing scenario in which data traffic of a UE is routed from a home network HPLMN to a visiting network VPLMN. A H-PCF, H-SMF, and H-UPF that are the PCF, SMF, and UPF of the home network and a V-PCF, V-SMF, and V-UPF that are the PCF, SMF, and UPF of the visited network may communicate through reference points N24, N16, and N9, respectively.

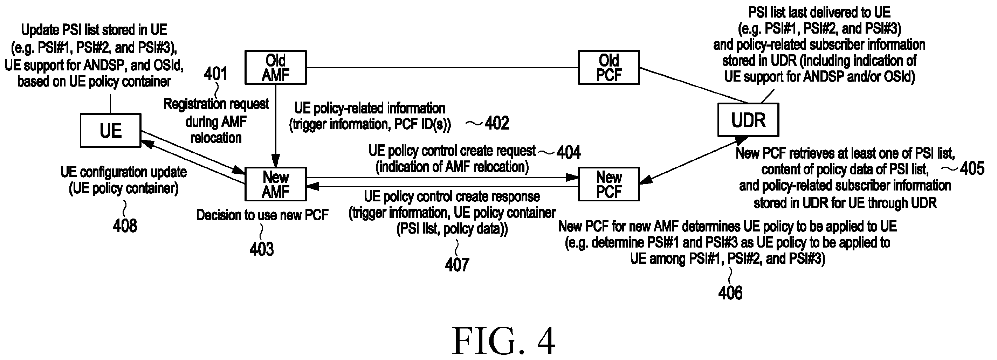

Hereinafter, basic functions of NFs in embodiments of FIGS. 4 to 12 according to the disclosure may be referred to the description of corresponding NFs in FIG. 1.

In the disclosure, FIGS. 4 to 12 propose various embodiments of a method for establishing a UE Policy Association according to AMF relocation including a PCF change. AMF relocation may occur when the UE moves or roams, and embodiments of the disclosure may be applied not only to AMF relocation according to the movement of the UE but also to AMF relocation in a roaming structure as in the examples of FIGS. 2 and 3.

In the embodiments of FIGS. 4 to 12, an old AMF and an old PCF mean the AMF and the PCF that provided services to the UE before AMF relocation of the UE occurred, and a new AMF and a new PCF mean the AMF and the PCF that provide services to the UE after AMF relocation of the UE occurs. In each NF, the expression of "V-" means the NF of the visited network, and the expression of "H-" means the NF of the home network. In the disclosure, the new AMF and the new PCF may be referred to as a first AMF and a first PCF, respectively, and the old AMF and the old PCF may be referred to as a second AMF and a second PCF, respectively. In the disclosure, the classification of the first AMF, the second AMF, the first PCF, and the second PCF is not limited thereto.

FIG. 4 is a diagram illustrating a UE policy association establishment method according to AMF relocation including a PCF change (UE policy association establishment procedure during AMF relocation with PCF change) in the wireless communication according to an embodiment of the disclosure.

The UE may store at least one of the following information (1) to (3) in relation to the UE policy:
(1) A policy section identifier (PSI) list (the list of PSIs) when UE policy-related data is received according to a previous registration procedure or a UE policy delivery procedure of the network, the PSI referring to the list of identifiers of each policy section when UE policy information is divided into policy sections in a predetermined size.
(2) Information related to an access network discovery and selection policy (ANDSP) of the UE, the ANDSP being a policy for the UE to select a Non-3GPP access network (for example, a Wi-Fi network).
(3) Information (OSId) related to supporting of an operating system (OS) of the UE

The UDR may store at least one piece of the following information (I) to (III) in relation to the UE policy.
I. The last list of PSIs delivered to the UE
II. The list of PSIs which should be delivered and installed on the UE
III. Policy-related subscription data
   a) Information related to supporting of the ANDSP of the UE (the indication of UE support for ANDSP) when provided to the network by the UE and/or,
   b) Information related to supporting of the OS of the UE (OSId) when provided to the network by the UE

The establishment of UE policy association according to AMF relocation including the PCF change may be performed by the following procedure in FIG. 4:

In operation 401, the UE may transmit a registration request to the new AMF when a registration or handover procedure is required as the AMF relocation situation occurs.

In operation 402, the old AMF may provide the New AMF with information related to the UE Policy when receiving a request for delivering UE context from the new AMF. Information related to the UE Policy may include trigger information and/or a PCF ID of the old PCF as shown in [Table 1] below. [Table 1] below shows an example of UE context in the AMF.

**[Table 1]**

| For the UE Policy Association: | |
|---|---|
| Trigger Information | The Policy Control Request Triggers on UE policy provided by PCF. |
| PCF ID(s) | The identifier of the PCF for UE Policy. In roaming, the identifiers of both V-PCF and H-PCF (NOTE 1) (NOTE 2). |
| NOTE 1: The AMF transfers the PCF ID to the SMF during PDU Session Establishment. The SMF may select the PCF identified by the PCF ID as described in clause 6.3.7.1 of TS 23.501 [2]. In HR roaming case, the AMF transfers the identifier of H-PCF as described in clause 4.3.2.2.2. In LBO roaming case, the AMF transfers the identifier of V-PCF as described in clause 4.3.2.2.1. | |
| NOTE 2: The PCF ID in AM Policy Association information and the PCF ID in UE Policy Association Information should be the same in non-roaming case. The V-PCF ID in AM Policy Association information and the V-PCF ID in UE Policy Association Information should be the same in roaming case. | |

In operation 403, the new AMF may determine to use a new PCF that does not use the PCF ID of the old PCF received from the old AMF. When it is determined to use the new PCF, the new AMF may select the new PCF according to a PCF search and selection procedure.

In operation 404, the new AMF may make a request for establishing UE policy association when the UE policy association has not been established for the current UE with the new PCF. To this end, the new AMF may transmit a UE policy control create request to the new PCF. When the new AMF has never established the UE policy association for the current UE with the new PCF but the current core network (or the current PLMN) has previously provided the UE policy to the current UE, the new AMF may provide an indicator indicating the same to the new PCF. In determining whether to provide the indicator to the new PCF, the new AMF may determine whether at least one of the following conditions C1) to C4) is satisfied, and may refer to this. The conditions C1) to C4) below may be commonly applied to the embodiments of FIGS. 4 to 12:
C1) When a type of the registration request of the UE corresponds to mobility registration update or periodic registration update
C2) When the UE was previously registered in the network through an AMF (for example, old AMF) different from the new AMF (for example, the new AMF may recognize the identifier of the AMF that registers and manages the UE, based on the identifier of the UE (for example, GUTI) provided by the UE through a registration request message in operation 401, and when the identifier indicates an AMF other than new AMF, it may be determined that the UE was previously registered in the network through the other AMF)
C3) When the PCF change is needed: the new AMF may receive the PCF ID of the old PCF (in the case of roaming, the old H-PCF and/or the old V-PCF) from the old AMF as described in operation 403. When receiving or not receiving the old PCF ID, the new AMF may search for and explore a PCF suitable for managing access and mobility of the UE at the current location of the UE and/or managing a UE policy. In this case, when the suitable PCF is not the old PCF (including the case where the old PCF ID is not received), it may be determined that the PCF change is needed.
C4) When the AMF does not receive a UE policy container or information or an indicator related to the UE policy (for example, a PSI list, policy data, an indication of UE support for ANDSP, and an OSId) from the UE

For example, the indicator may be:
(A) The UE policy association establishment request may be an indicator indicating that it is an establishment request for a UE that has previously received the UE policy to the new PCF. In another example,
(B) The UE policy association establishment request may be an indicator indicating that it is a request generated during a registration procedure that is a different type from the initial registration of the UE to the new PCF. In another example,
(C) The UE policy association establishment request may be an indicator indicating that it is a request generated according to the PCF change during the AMF relocation procedure to the new PCF.

More specifically, when the registration type included in the registration request message transmitted by the UE in operation 401 corresponds to the mobility registration or the periodic registration update (corresponding to the condition C1), the old PCF ID is received (or is not received) from the old AMF that managed registration of the UE (corresponding to the condition C2), a new PCF is selected (corresponding to the condition C3), and the registration request message transmitted by the UE does not include the UE policy container (corresponding to the condition C4), the AMF may determine that the request generated according to the PCF change during the AMF relocation procedure and inform of this.

In the following description, the indicator is described as an indication of AMF relocation for convenience. That is, embodiments of the disclosure will be described as an example of the case where the indicator corresponds to (C), but embodiments of the disclosure may be applied in the same/similar manner even when the indicator corresponds to (A) or (B).

When receiving a UE policy control create request, the new PCF may make a request for at least one piece of the following information (a) to (c) to the UDR in operation 405:
(a) The PSI list last transmitted to the UE
(b) Policy data content (its content) of (a)
(c) Policy-related subscription information: (c) may include the indication of UE support for ANDSP and/or the OSId as shown in [Table 2] below. [Table 2] below shows an example of UE context policy control subscription information.

**[Table 2]**

| Information name | Description | Category |
|---|---|---|
| Subscriber categories | List of category identifiers associated with the subscriber | Optional |
| Tracing Requirements | Tracing requirements as defined in TS 32.421 [18] | Optional |
| PEI | The Permanent Equipment Identifier of the UE. | Optional |
| OSId | Identifies the operating system supported by UE. | Optional |
| Indication of UE support for ANDSP | Indicates the UE support for ANDSP. | Optional |
| S-NSSAI subscription information | Contains the list of subscribed S-NSSAIs, its associated subscribed DNNs. For each DNN, it includes the Allowed PDU Session types, the Allowed SSC modes and the ATSSS information (NOTE). | Optional |
| NOTE: ATSSS information is defined in TS 23.502 [3] Table 5.2.3.3.1-1 and Indicates whether MA PDU Session establishment is allowed. | | |

Even if the UE policy control create request received from the new AMF is not a request by the initial registration of the UE (for example, the mobility registration update of the UE or periodic registration update of the UE), the new PCF may determine that there is a UE policy which the UE previously received from the network, and in this case, a request for at least one piece of the information (a) to (c) described in operation 405 of FIG. 4 may be made to the H-UDR. When receiving or not receiving the indicator (hereinafter, referred to as the indication of AMF relocation) described in operation 4, the old H-PCF may determine that there is the UE policy which the UE previously received from the network. This determination may be made by the old H-PCF or another NF and then the old H-PCF may be informed of it. For example, when the UE policy container (or UE policy-related data that the UE provides to the network) is not included in the UE policy control create request, the new PCF may determine that it corresponds to one situation among (A) to (C) described in operation 404 and may make a request for at least one piece of the information (a) to (c) to the UDR. In another example, when the UE policy container (or UE policy-related data that the UE provides to the network) is not included in the UE policy control create request and the indication of AMF relocation is included therein, the new PCF may determine that it corresponds to one situation among (A) to (C) described in operation 404 and may make a request for at least one piece of the information (a) to (c) to the UDR.

When the request for the information cannot be directly made to the UDR or when the direct request is not appropriate (for example, when an address of the UDR cannot be known, access to the UDR is impossible, or when information on the UDR is not reliable), the new PCF may acquire the information from the UDR through the old PCF in operation 405. When the new AMF determines that the new PCF cannot directly make a request for the information to the UDR or the direct request is not appropriate, the new AMF may additionally provide the new PCF with the old PCF ID in operation 404. When the new PCF intends to acquire the information from the UDR through the old PCF even though the new AMF does not provide the old PCF ID, the new PCF may receive the old PCF ID from the NRF.

Further, in operation 405, the new PCF may make a request for receiving at least one piece of the information (a) to (c) from the UDR to the old PCF. The old PCF may make a request for and receive at least one piece of the information (a) to (c) requested by the new PCF. The old PCF may provide the new PCF with information received from the UDR. When receiving the indicator (hereinafter, referred to as the indication of AMF relocation) from the new AMF, the new PCF may transfer the same to the old PCF and, when not receiving the indicator, may provide the old PCF with the same, based on the determination of the new PCF. The old PCF receiving the indicator may make a request for at least one piece of the information (a) to (c) requested by the new PCF to the UDR and acquire the same or may identify whether there is information stored in the old PCF.

In operation 406, the new PCF may determine the UE policy for the UE with the new AMF, based on at least one piece of the information (a) to (c) received from the UDR. In determining the UE policy, the new PCF may additionally determine the information received from another UDR or the AF. For example, when the new PCF recognizes that PSI#1, PSI#2, and PSI#3 are installed and stored in the UE according to the information received from the UDR in operation 405, and when it is determined that the policy corresponding to, for example, PSI#2 no longer needs to be applied to the UE according to the information received from another UDR (or database related to other subscriber information) or the AF, the new PCF may reconstruct the PSI list and policy data to allow the UE to uninstall and remove PSI#2 stored in the UE and generate trigger information for the AMF corresponding thereto. In addition, when the policy-related subscription data of the information received from the UDR in operation 405 includes the ANDSP support information of the UE and/or the OS support information even though the ANDSP support information of the UE and/or the OS support information are not received from the new AMF in operation 405, the new PCF may determine the UE policy applying the same. For example, this corresponds to the case where the UE policy is determined in consideration that the new PCF receives the ANDSP support information from the UE even though the new PCF has not received the ANDSP support information of the UE from the UE through the AMF (conventionally, when the PCF has not received the ANDSP support information of the UE from the UE, the PCF determined the UE policy that does not apply the ANDSP).

In operation 407, the new PCF may transmit a UE policy control create response to the new AMF in response to the request of operation 404. The response may include at least one of the trigger information for the AMF, the PSI list, and the policy data. The PSI list and the policy data may be provided while being included in the UE policy container. The new PCF may provide the trigger information, PSI list, and policy data provided to the new AMF to the UDR to determine whether the content stored in the UDR should be updated, and provide the UDR with information provided to the new AMF according to the determination result. The UDR may update the stored information related to the UE policy, based on the information received from the new PCF.

In operation 408, the new AMF may provide the UE policy container received in operation 407 to the UE by using a UE configuration update (UCU) procedure. Based on the content of the received UE policy container, the UE may update the stored PSI list and policy data.

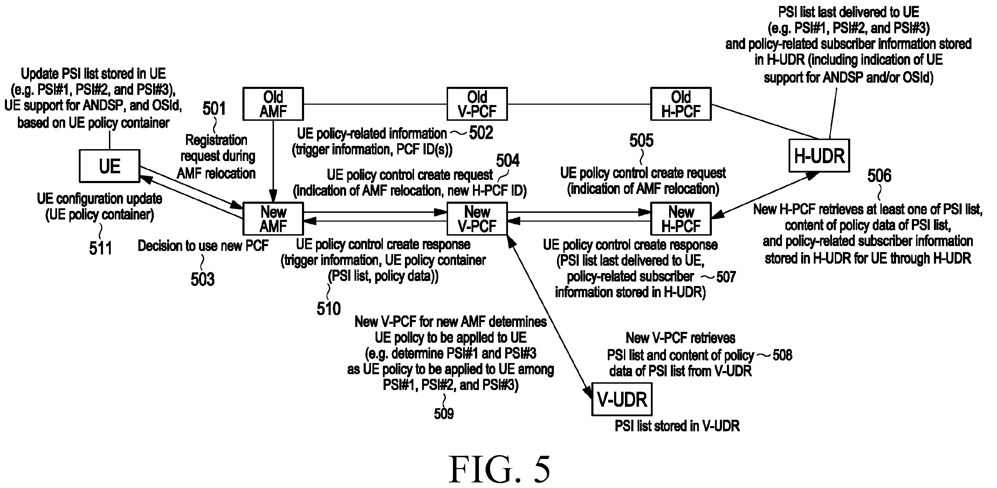

FIG. 5 is a diagram illustrating a UE policy association establishment method according to AMF relocation including a PCF change (UE policy association establishment procedure during AMF relocation with PCF change) in the wireless communication according to an embodiment of the disclosure. In description of FIG. 5, the content common to those of FIG. 4 may be omitted for convenience.

The UE may store at least one piece of the information (1) to (3) described in FIG. 4 in relation to the UE policy.

The UDR may store at least one piece of the information (I) to (III) described in FIG. 4 in relation to the UE policy.

In the 5G system roaming structure, the UE policy association establishment according to AMF relocation including the PCF change may be performed by the following procedure.

In operation 501, the UE may transmit a registration request to the new AMF when a registration or handover procedure is required as the AMF relocation situation occurs.

In operation 502, the old AMF may provide the New AMF with information related to the UE Policy when receiving a request for delivering UE context from the new AMF. Information related to the UE policy may include the trigger information and/or the PCF ID of the old PCF as shown in [Table 1] below. In the 5G roaming system, the PCF ID of the old PCF may include PCF IDs of the old V-PCF and the old H-PCF.

In operation 503, the new AMF may determine to use a new PCF that does not use the PCF ID of the old PCF received from the old AMF. When it is determined to use the new PCF, the new AMF may select the new PCF according to a PCF search and selection procedure. More specifically, the new AMF may determine to use the new PCF for both the V-PCF and the H-PCF. The new AMF may select a new V-PCF and perform operation 504 below. The new AMF may additionally select a new H-PCF and provide a PCF ID of the new H-PCF to the new V-PCF in operation 504 below.

In operations 504 and 505, the new AMF may make a request for establishing UE policy association when the UE policy association has not been established for the current UE with the new PCF.

Specifically, in operation 504, the new AMF may transmit a UE policy control create request to the new V-PCF. When the new AMF has never established the UE policy association for the current UE with the new V-PCF but the current core network (or the current PLMN) has previously provided the UE policy to the current UE, the new AMF may provide an indicator indicating the same to the new PCF. The indicator may correspond to the indicator described in operation 404 of FIG. 4. The new AMF may transmit the UE policy control create request including the new H-PCF ID described in operation 503 to the new V-PCF.

In operation 505, the new V-PCF may transmit the UE policy control create request to the new H-PCF. The new V-PCF may transfer the UE policy control create request including the indicator provided by the new AMF (the indicator indicating that the new AMF has never established the UE policy association for the current UE with the new V-PCF but the current core network (or current PLMN) has previously provided the UE policy to the current UE or the indicator described in operation 404 of FIG. 4) to the new H-PCF. When receiving or not receiving the indicator (hereinafter, referred to as the indication of AMF relocation) from the new AMF, the new V-PCF may determine that there is the UE policy which the UE previously received from the network. This determination may be made by the new V-PCF or another NF and then the new V-PCF is informed of the same. When determining that there is the UE policy which the UE previously received from the network, the new V-PCF may provide the indicator to the new H-PCF.

In operation 506, when receiving the UE policy control create request, the new H-PCF may make a request for at least one piece of the following information (a) to (c) described in operation 405 of FIG. 4 to the H-UDR and receive the same.

Even if the UE policy control create request received from the new V-PCF is not a request by the initial registration of the UE (for example, the mobility registration update of the UE or periodic registration update of the UE), the new H-PCF may determine that there is a UE policy which the UE previously received from the network, and in this case, make a request for at least one piece of the information (a) to (c) to the UDR. When receiving or not receiving the indicator (hereinafter, referred to as the indication of AMF relocation) described in operation 404 of FIG. 4, the new H-PCF may determine that there is the UE policy which the UE previously received from the network. This determination may be made by the new H-PCF or another NF and then the new H-PCF is informed of the same. For example, when the UE policy container (or UE policy-related data that the UE provides to the network) is not included in the UE policy control create request, the new H-PCF may determine that it corresponds to one situation among (A) to (C) described in operation 404 of FIG. 4 and may make a request for at least one piece of the information (a) to (c) described in operation 405 of FIG. 4 to the H-UDR. In another example, when the UE policy container (or UE policy-related data that the UE provides to the network) is not included in the UE policy control create request and the indication of AMF relocation is included therein, the new H-PCF may determine that it corresponds to one situation among (A) to (C) described in operation 404 of FIG. 4 and may make a request for at least one piece of the information (a) to (c) described in operation 405 of FIG. 4 to the H-UDR. The description made in operation 405 of FIG. 4 may be applied to the new H-PCF in FIG. 5. When the new H-PCF cannot directly make a request for information to the H-UDR or the direct request is not appropriate, the new H-PCF may make a request for the information to the H-UDR through the old H-PCF. This may be determined by the new AMF, the new V-PCF, or the new H-PCF. When the new AMF performs the determination, the new AMF may provide the old V-PCF ID and/or the old H-PCF ID in operation 504. The new V-PCF may transfer the old V-PCF ID and/or old H-PCF ID received from the new AMF to the new H-PCF in operation 505. When the old V-PCF ID and/or old H-PCF ID are not received in operation 505, the new H-PCF may receive the old V-PCF ID and/or old H-PCF ID from the NRF, and make a request for acquiring at least one piece of the information (a) to (c) from the old V-PCF or the old H-PCF and providing the same. When transmitting a request to the old V-PCF, the old V-PCF may acquire the information from the H-UDR through the old H-PCF. When receiving the indicator (hereinafter, referred to as the indication of AMF relocation) from the new V-PCF, the new H-PCF may transfer the indicator to the old V-PCF or the old H-PCF and, when not receiving the indicator, may provide the old V-PCF or the old H-PCF with the indicator, based on the determination of the new H-PCF. The old V-PCF receiving the indicator may make a request for and acquire at least one piece of the information (a) to (c) requested by the new H-PCF or may identify whether there is information stored in the old V-PCF or the old H-PCF.

In operation 507, the new H-PCF may transmit a UE policy control create response to the new V-PCF in response to the request of operation 505. The new H-PCF may transfer at least one piece of the information (a) to (c) received from the H-UDR to the new V-PCF.

When receiving the UE policy control create request from the new AMF, the new V-PCF may make a request for at least one piece of the following information (d) to (e) and receive the same from the V-UDR in operation 508:
(d) The list of PSIs which should be delivered and installed on the UE
(e) Policy data content (its content) of (d)

In operation 509, the new V-PCF may determine the UE policy for the UE with the new AMF, based on at least one piece of the information (a) to (c) received from the new H-PCF and/or at least one piece of the information (d) to (e) received from the V-UDR. In determining the UE policy, the new V-PCF may additionally determine the information received from another UDR or the AF. For example, when the new V-PCF recognizes that PSI#1, PSI#2, and PSI#3 are installed and stored in the UE according to the information received from the H-UDR delivered from the new H-PCF in operation 507, and when it is determined that the policy corresponding to, for example, PSI#2 no longer needs to be applied to the UE according to the information received from another UDR (V-UDR or database related to other subscriber information) or the AF, the new V-PCF may reconstruct the PSI list and policy data to allow the UE to uninstall and remove PSI#2 stored in the UE and generate trigger information for the AMF corresponding thereto. In addition, when the policy-related subscription data of the information received from the H-UDR through the new H-PCF in operation 507 includes the ANDSP support information of the UE and/or the OS support information even though the ANDSP support information of the UE and/or the OS support information are not received from the new AMF in operation 504, the new V-PCF may determine the UE policy applying the same. For example, this corresponds to the case where the UE policy is determined in consideration that the new PCF receives the ANDSP support information from the UE even though the new PCF has not received the ANDSP support information of the UE from the UE through the AMF (conventionally, when the PCF has not received the ANDSP support information of the UE from the UE, the PCF determined the UE policy that does not apply the ANDSP).

In operation 510, the new V-PCF may transmit a UE policy control create response to the new AMF in response to the request of operation 504. The response may include at least one of the trigger information for the AMF, the PSI list, and the policy data. The PSI list and the policy data may be provided while being included in the UE policy container. The new V-PCF may provide the trigger information, PSI list, and policy data provided to the new AMF to the V-UDR to determine whether the content stored in the V-UDR should be updated, and provide the V-UDR with information provided to the new AMF according to the determination result. The V-UDR may update the information related to the UE policy stored as the information received from the new V-PCF.

In operation 511, the new AMF may provide the UE policy container received in operation 510 to the UE by using a UE configuration update procedure. Based on the content of the received UE policy container, the UE may update the stored PSI list and policy data.

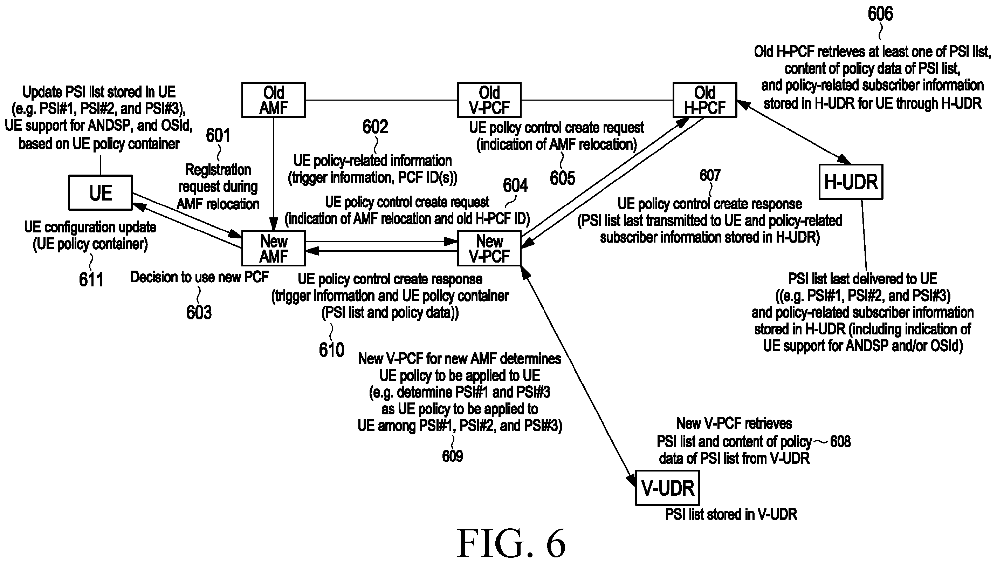

FIG. 6 is a diagram illustrating a UE policy association establishment method according to AMF relocation including a PCF change (UE policy association establishment procedure during AMF relocation with PCF change) in the roaming structure of the wireless communication according to an embodiment of the disclosure. In description of FIG. 6, the contents common to those of FIGS. 4 and 5 may be omitted for convenience.

The UE may store at least one piece of the information (1) to (3) described in FIG. 4 in relation to the UE policy.

The UDR may store at least one piece of the information (I) to (III) described in FIG. 4 in relation to the UE policy.

In the 5G system roaming structure, the UE policy association establishment according to AMF relocation including the PCF change may be performed by the following procedure.

In operation 601, the UE may transmit a registration request to the new AMF when a registration or handover procedure is required as the AMF relocation situation occurs.

In operation 602, the old AMF may provide the New AMF with information related to the UE Policy when receiving a request for delivering UE context from the new AMF. Information related to the UE policy may include the trigger information and/or the PCF ID of the old PCF as shown in [Table 1] below. In the 5G roaming system, the PCF ID of the old PCF may include PCF IDs of the old V-PCF and the old H-PCF.

In operation 603, the new AMF may determine to use a new PCF that does not use the PCF ID of the old PCF received from the old AMF. When it is determined to use the new PCF, the new PCF may be selected according to a PCF search and selection procedure. More specifically, the new AMF may maintain the H-PCF (that is, the old H-PCF) and determine to use a new PCF for the V-PCF. The new AMF may select a new V-PCF and perform operation 604 below. The new AMF may provide the PCF ID of the old H-PCF provided by the old AMF to the new V-PCF in operation 604 below.

In operations 604 and 605, the new AMF may make a request for establishing UE policy association when the UE policy association has not been established for the current UE with the new PCF.

Specifically, in operation 604, the new AMF may transmit a UE policy control create request to the new V-PCF. When the new AMF has never established the UE policy association for the current UE with the new V-PCF but the current core network (or the current PLMN) has previously provided the UE policy to the current UE, the new AMF may provide an indicator indicating the same to the new V-PCF. The indicator may correspond to the indicator described in operation 404 of FIG. 4. The new AMF may transmit the UE policy control create request including the indicator the old H-PCF ID described in operation 603 to the new V-PCF. In determining whether to provide the old H-PCF ID by the new AMF, it may be considered that the content described in operation 405 of FIG. 4 and operation 506 of FIG. 5 is applied to the new V-PCF in FIG. 6. For example, when the new V-PCF cannot directly make a request for information to the UDR or the direct request is not appropriate, the new V-PCF may make a request for the information to the UDR through the old H-PCF. This may be determined by the new AMF or the new V-PCF. When the new AMF performs the determination, the new AMF may provide the old V-PCF ID and/or the old H-PCF ID in operation 604. When not receiving the old V-PCF ID and/or the old H-PCF ID in operation 604, the new V-PCF may receive the old V-PCF ID and/or the old H-PCF ID from the NRF and make a request for acquiring and providing at least one piece of the information (a) to (c) from the H-UDR to the old V-PCF or the old H-PCF. When transmitting a request to the old V-PCF, the old V-PCF may acquire the information from the H-UDR through the old H-PCF. The case where the request is transmitted to the old H-PCF is described in more detail in operations 605 to 607 below.

In operation 605, the new V-PCF may transmit the UE policy control create request to the new H-PCF. The new V-PCF may transfer the UE policy control create request including the indicator provided by the new AMF (the indicator indicating that the new AMF has never established the UE policy association for the current UE with the new V-PCF but the current core network (or current PLMN) has previously provided the UE policy to the current UE or the indicator described in operation 404 of FIG. 4) to the old H-PCF. When receiving or not receiving the indicator (hereinafter, referred to as the indication of AMF relocation) from the new AMF, the new V-PCF may determine that the there is a UE policy which the UE previously received from the network. This determination may be made by the new V-PCF or another NF and then the new V-PCF is informed of the same. When determining that there is the UE policy which the UE previously received from the network, the new V-PCF may provide the indicator to the old H-PCF.

In operation 606, when receiving the UE policy control create request, the old H-PCF may make a request for at least one piece of the following information (a) to (c) described in operation 405 of FIG. 4 to the H-UDR and receive the same.

Even if the UE policy control create request received from the new V-PCF is not a request by the initial registration of the UE (for example, the mobility registration update of the UE or periodic registration update of the UE), the old H-PCF may determine that the there is a UE policy which the UE previously received from the network, and in this case, a request for at least one piece of the information (a) to (c) described in operation 405 of FIG. 4 may be made to the H-UDR. When receiving or not receiving the indicator (hereinafter, referred to as the indication of AMF relocation) described in operation 404 of FIG. 4, the old H-PCF may determine that there is the UE policy which the UE previously received from the network. This determination may be made by the old H-PCF or another NF and then the old H-CPF is informed of the same. For example, when the UE policy container (or UE policy-related data that the UE provides to the network) is not included in the UE policy control create request, the old H-PCF may determine that it corresponds to one situation among (A) to (C) described in operation 404 of FIG. 4 and may make a request for at least one piece of the information (a) to (c) described in operation 405 of FIG. 4 to the H-UDR. In another example, when the UE policy container (or UE policy-related data that the UE provides to the network) is not included in the UE policy control create request and the indication of AMF relocation is included therein, the old H-PCF may determine that it corresponds to one situation among (A) to (C) described in operation 404 of FIG. 4 and may make a request for at least one piece of the information (a) to (c) described in operation 405 of FIG. 4 to the H-UDR.

In operation 607, the old H-PCF may transmit a UE policy control create response to the new V-PCF in response to the request of operation 605. The old H-PCF may transfer at least one piece of the information (a) to (c) received from the H-UDR to the new V-PCF.

When receiving the UE policy control create request from the new AMF in operation 608, the new V-PCF may make a request for at least one piece of the information (d) to (e) described in operation 508 of FIG. 5 and receive the same from the V-UDR.

In operation 609, the new V-PCF may determine the UE policy for the UE with the new AMF, based on at least one piece of the information (a) to (c) received from the old H-PCF and/or at least one piece of the information (d) to (e) received from the V-UDR. In determining the UE policy, the new V-PCF may additionally determine the information received from another UDR or the AF. For example, when the new V-PCF recognizes that PSI#1, PSI#2, and PSI#3 are installed and stored in the UE according to the information received from the H-UDR delivered from the old H-PCF in operation 607, and when it is determined that the policy corresponding to, for example, PSI#2 no longer needs to be applied to the UE according to the information received from another UDR (V-UDR or database related to other subscriber information) or the AF, the new V-PCF may reconstruct the PSI list and policy data to allow the UE to uninstall and remove PSI#2 stored in the UE and generate trigger information for the AMF corresponding thereto. In addition, when the policy-related subscription data of the information received from the H-UDR through the old H-PCF in operation 607 includes the ANDSP support information of the UE and/or the OS support information even though the ANDSP support information of the UE and/or the OS support information are not received from the new AMF in operation 604, the new V-PCF may determine the UE policy applying the same. For example, this corresponds to the case where the UE policy is determined in consideration that the new PCF receives the ANDSP support information from the UE even though the new V-PCF has not received the ANDSP support information of the UE from the UE through the AMF (conventionally, when the PCF has not received the ANDSP support information of the UE from the UE, the PCF determined the UE policy that does not apply the ANDSP).

In operation 610, the new V-PCF may transmit a UE policy control create response to the new AMF in response to the request of operation 604. The response may include at least one of the trigger information for the AMF, the PSI list, and the policy data. The PSI list and the policy data may be provided while being included in the UE policy container. The new V-PCF may provide the trigger information, PSI list, and policy data provided to the new AMF to the V-UDR to determine whether the content stored in the V-UDR should be updated, and provide the V-UDR with information provided to the new AMF according to the determination result. The V-UDR may update the information related to the UE policy stored as the information received from the new V-PCF.

In operation 611, the new AMF may provide the UE policy container received in operation 610 to the UE by using a UE configuration update procedure. Based on the content of the received UE policy container, the UE may update the stored PSI list and policy data.

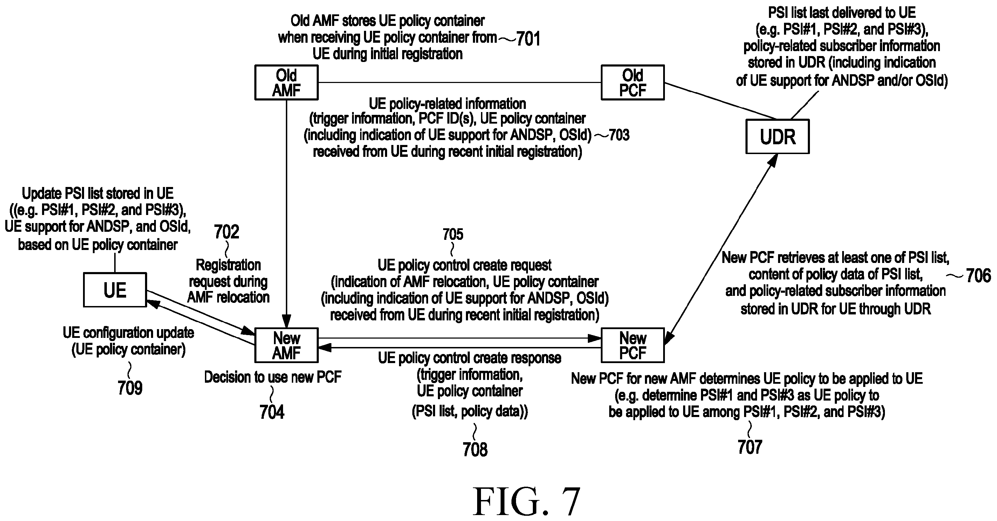

FIGS. 7 to 9 illustrate a UE policy association establishment method according to AMF relocation including a PCF change in the case where the old AMF stores a UE policy container which the UE provides to the network when the UE performs the initial registration procedure through the old AMF in the method described in FIGS. 4 to 6. In comparison between FIGS. 7 to 9 and FIGS. 4 to 6, there are difference in that a process in which the old AMF stores the UE policy container in operations 701, 801, and 901 below is added, the old AMF may provide the UE policy container to the new AMF in operations 703, 803, and 903 below, and the UE policy container provided by the old AMF may be included in the UE policy control create request in operation 705 (or operations 805 and 806 and operations 905 and 906). Detailed content is described in description of each drawing.

If the new PCF (FIG. 4), the new H-PCF (FIG. 5), and the new V-PCF (FIG. 6) cannot directly make a request for information to the UDR or the direct request is not appropriate among the content described in operation 405 of FIG. 4, operation 506 of FIG. 5, and operation 604 of FIG. 6, a procedure of making a request for the information to the UDR through the old H-PCF (including the old V-PCF in FIGS. 5 and 6) may also be applied to FIGS. 7 to 9.

In addition, as described in the embodiments of FIGS. 4 to 6, the method that the new PCF can determine even when the new PCF does not receive the indication from the new AMF, the method that the new H-PCF can provide the indication to the new H-PCF, based on the determination of the new V-PCF even though the new AMF does not deliver the indication to the new V-PCF in the case of roaming, and the method that can also provide the indication when new H-PCF and/or the new V-PCF transmit the request to the old H-PCF and/or old V-PCF may be applied to the embodiments of FIGS. 7 to 9 below.

FIG. 7 is a diagram illustrating a UE policy association establishment method according to AMF relocation including a PCF change (UE policy association establishment procedure during AMF relocation with PCF change) in the wireless communication according to an embodiment of the disclosure. In the following description, the content common to the content of FIG. 4 may be omitted for convenience in the description of FIG. 7.

The UE may store at least one piece of the information (1) to (3) described in FIG. 4 in relation to the UE policy.

The UDR may store at least one piece of the information (I) to (III) described in FIG. 4 in relation to the UE policy.

The UE policy association establishment according to AMF relocation including the PCF change may be performed by the following procedure:

In operation 701, the old AMF may store a UE policy container which the UE provided to the network during an initial registration procedure last performed by the UE and the network. The UE policy container may include at least one piece of the information (1) to (3) described in FIG. 4.

In operation 702, the UE may transmit a registration request to the new AMF when a registration or handover procedure is required as the AMF relocation situation occurs.

In operation 703, the old AMF may provide the new AMF with information related to the UE Policy when receiving a request for delivering UE context from the new AMF. Information related to the UE policy may include trigger information and/or the PCF ID of the old PCF as shown in [Table 1] above and further include the UE policy container provided by the UE during the last (recent) initial registration procedure of the UE described in operation 701. The UE policy container may include information related to ANDSP support of the UE (the indication of UE support for ANDSP) and/or information related to OS support of the UE (OSId).

In operation 704, the new AMF may determine to use a new PCF that does not use the PCF ID of the old PCF received from the old AMF. When it is determined to use the new PCF, the new AMF may select the new PCF according to a PCF search and selection procedure.

In operation 705, the new AMF may make a request for establishing UE policy association when the UE policy association has not been established for the new PCF and the current UE. To this end, the new AMF may transmit a UE policy control create request to the new PCF. The new AMF has never established the UE policy association for the new PCF and the current UE, but if the current core network (or the current PLMN) has previously provided the UE policy to the current UE, the new AMF may provide an indicator indicating the same to the new PCF. The indicator may correspond to the indicator described in operation 704 of FIG. 4. The new AMF may transmit a UE policy control create request including the UE policy container provided by the UE during the last (recent) initial registration procedure of the UE described in operation 703 to the new PCF.

When receiving the UE policy control create request, the new PCF may make a request for at least one piece of the following information (a) to (c) described in FIG. 4 to the UDR and receive the same in operation 706:

When it is determined that there is the UE policy which the UE previously received from the network even if the UE Policy control create request received from the new AMF is not a request by the initial registration of the UE, the new PCF may make a request for at least one of (a) to (c) to the UDR. For example, when the UE policy container (or UE policy-related data that the UE provides to the network) is not included in the UE policy control create request, the new PCF may determine that it corresponds to one situation among (A) to (C) described in operation 404 of FIG. 4 and may make a request for at least one piece of the information (a) to (c) to the UDR. In another example, when the UE policy container (or UE policy-related data that the UE provides to the network) is not included in the UE policy control create request and the indication of AMF relocation is included therein, the new PCF may determine that it corresponds to one situation among (A) to (C) described in operation 404 of FIG. 4 and may make a request for at least one piece of the information (a) to (c) to the UDR.

In operation 707, the new PCF may determine the UE policy for the UE with the new AMF, based on at least one piece of the information (a) to (c) received from the UDR. In determining the UE policy, the new PCF may additionally determine the information received from another UDR or the AF. For example, when the new PCF recognizes that PSI#1, PSI#2, and PSI#3 are installed and stored in the UE according to the information received from the UDR in operation 706, and when it is determined that the policy corresponding to, for example, PSI#2 no longer needs to be applied to the UE according to the information received from another UDR (or database related to other subscriber information) or the AF, the new PCF may reconstruct the PSI list and policy data to allow the UE to uninstall and remove PSI#2 stored in the UE and generate trigger information for the AMF corresponding thereto. In addition, even if the ANDSP support information of the UE and/or the OS support information are not received from the new AMF in operation 705, if the policy-related subscription data of the information received from the UDR in operation 706 includes the ANDSP support information of the UE and/or the OS support information, the new PCF may determine the UE policy applying the same. For example, this corresponds to the case where the UE policy is determined in consideration that the new PCF receives the ANDSP support information from the UE even though the new PCF has not received the ANDSP support information of the UE from the from the UE through the AMF (conventionally, when the PCF has not received the ANDSP support information of the UE from the UE, the PCF determined the UE policy that does not apply the ANDSP). In addition, when the ANDSP support information of the UE and/or the OS support information are included in the UE policy container among the information received from the old AMF through the new AMF in operation 705 even though the ANDSP support information of the UE and/or the OS support information are not received from the UDR in operation 706, the new PCF may determine the UE policy applying the same.

In operation 708, the new PCF may transmit a UE policy control create response to the new AMF in response to the request of operation 705. The response may include at least one of the trigger information for the AMF, the PSI list, and the policy data. The PSI list and the policy data may be provided while being included in the UE policy container. The new PCF may provide the trigger information, PSI list, and policy data provided to the new AMF to the UDR to determine whether the content stored in the UDR should be updated, and provide the UDR with information provided to the new AMF according to the determination result. The UDR may update the stored information related to the UE policy, based on the information received from the new PCF.

In operation 709, the new AMF may provide the UE policy container received in operation 708 to the UE by using a UE configuration update procedure. Based on the content of the received UE policy container, the UE may update the stored PSI list and policy data.

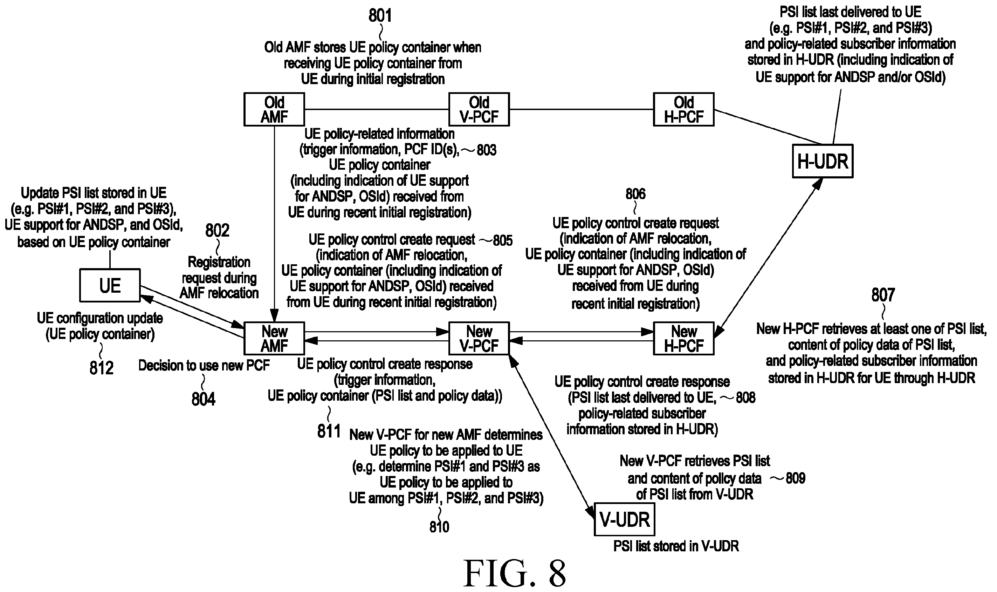

FIG. 8 is a diagram illustrating a UE policy association establishment method according to AMF relocation including a PCF change (UE policy association establishment procedure during AMF relocation with PCF change) in the roaming structure of the wireless communication according to an embodiment of the disclosure. The content common to the content of FIGS. 4, 5, and 7 may be omitted.

The UE may store at least one piece of the information (1) to (3) described in FIG. 4 in relation to the UE policy.

The UDR may store at least one piece of the information (I) to (III) described in FIG. 4 in relation to the UE policy.

In the 5G system roaming structure, the UE policy association establishment according to AMF relocation including the PCF change may be performed by the following procedure.

In operation 801, the old AMF may store a UE policy container which the UE provided to the network during an initial registration procedure last performed by the UE and the network. The UE policy container may include at least one piece of the information (1) to (3) described in FIG. 4.

In operation 802, the UE may transmit a registration request to the new AMF when a registration or handover procedure is required as the AMF relocation situation occurs.

In operation 803, the old AMF may provide the new AMF with information related to the UE policy when receiving a request for delivering UE context from the new AMF. Information related to the UE policy may include trigger information and/or the PCF ID of the old PCF as shown in [Table 1] above and further include the UE policy container provided by the UE during the last (recent) initial registration procedure of the UE described in operation 801. The UE policy container may include information related to ANDSP support of the UE (the indication of UE support for ANDSP) and/or information related to OS support of the UE (OSId). In the 5G roaming system, the PCF ID of the old PCF may include PCF IDs of the old V-PCF and the old H-PCF.

In operation 804, the new AMF may determine to use a new PCF that does not use the PCF ID of the old PCF received from the old AMF. When it is determined to use the new PCF, the new AMF may select the new PCF according to a PCF search and selection procedure. More specifically, the new AMF may determine to use the new PCF for both the V-PCF and the H-PCF. The new AMF may select a new V-PCF and perform operation 805 below. The new AMF may additionally select a new H-PCF and provide a PCF ID of the new H-PCF to the new V-PCF in operation 805 below.

In operations 805 and 806, the new AMF may make a request for establishing UE policy association when the UE policy association has not been established for the current UE with the new PCF.

Specifically, in operation 805, the new AMF may transmit a UE policy control create request to the new V-PCF. When the new AMF has never established the UE policy association for the current UE with the new V-PCF but the current core network (or the current PLMN) has previously provided the UE policy to the current UE, the new AMF may provide an indicator indicating the same to the new V-PCF. The indicator may correspond to the indicator described in operation 404 of FIG. 4. The new AMF may provide the UE policy control create request including the indicator and the new H-PCF ID described in operation 804 to the new V-PCF. Further, the new AMF may transmit a UE policy control create request including the UE policy container provided by the UE during the last (recent) initial registration procedure of the UE described in operation 803 to the new V-PCF.

In operation 806, the new V-PCF may transmit the UE policy control create request to the new H-PCF. The new V-PCF may transfer the UE policy control create request including the indicator provided by the new AMF (the indicator indicating that the new AMF has never established the UE policy association for the current UE with the new V-PCF but the current core network (or current PLMN) has previously provided the UE policy to the current UE or the indicator described in operation 404 of FIG. 4) to the new H-PCF. The new V-PCF may transmit the UE policy control create request including the UE policy container provided by the UE during the last (recent) initial registration procedure of the UE received from the new AMF to the new H-PCF. When the content of the UE policy container received from the new AMF cannot be read in operation 805, the new V-PCF may transfer the same to the new H-PCF and then receive the content from the new H-PCF through operation 808 below, and the content may include ANDSP support information of the UE and/or OS support information.

In operation 807, when receiving the UE policy control create request, the new H-PCF may make a request for at least one piece of the following information (a) to (c) described in operation 405 of FIG. 4 to the UDR and receive the same.

When it is determined that there is the UE policy which the UE previously received from the network even though the UE policy control create request received from the new V-PCF is not a request by the initial registration of the UE, the new H-PCF may make a request for at least one of (a) to (c) described in operation 405 of FIG. 4 to the H-UDR. For example, when the UE policy container (or UE policy-related data that the UE provides to the network) is not included in the UE policy control create request, the new H-PCF may determine that it corresponds to one situation among (A) to (C) described in operation 404 of FIG. 4 and may make a request for at least one piece of the information (a) to (c) described in operation 405 of FIG. 4 to the H-UDR. In another example, when the UE policy container (or UE policy-related data that the UE provides to the network) is not included in the UE policy control create request and the indication of AMF relocation is included therein, the new H-PCF may determine that it corresponds to one situation among (A) to (C) described in operation 404 of FIG. 4 and may make a request for at least one piece of the information (a) to (c) described in operation 405 of FIG. 4 to the H-UDR.

In operation 808, the new H-PCF may transmit a UE policy control create response to the new V-PCF in response to the request of operation 806. The new H-PCF may transfer at least one piece of the information (a) to (c) received from the H-UDR to the new V-PCF. When the ANDSP support information of the UE and/or the OS support information are included in the UE policy container among the information received from the old AMF through the new V-PCF in operation 806 even though the ANDSP support information of the UE and/or the OS support information are not received from the H-UDR in operation 807, the new H-PCF may transfer the same to the V-PCF.

In operation 809, when receiving the UE policy control create request from the new AMF, the new V-PCF may make a request for at least one piece of the information (d) to (e) described in operation 508 of FIG. 5 and receive the same from the V-UDR.

In operation 810, the new V-PCF may determine the UE policy for the UE with the new AMF, based on at least one piece of the information (a) to (c) received from the new H-PCF and/or at least one piece of the information (d) to (e) received from the V-UDR. In determining the UE policy, the new V-PCF may additionally determine the information received from another UDR or the AF. For example, when the new V-PCF recognizes that PSI#1, PSI#2, and PSI#3 are installed and stored in the UE according to the information received from the H-UDR delivered from the new H-PCF in operation 808, and when it is determined that the policy corresponding to, for example, PSI#2 no longer needs to be applied to the UE according to the information received from another UDR (V-UDR or database related to other subscriber information) or the AF, the new V-PCF may reconstruct the PSI list and policy data to allow the UE to uninstall and remove PSI#2 stored in the UE and generate trigger information for the AMF corresponding thereto. In addition, when the policy-related subscription data of the information received from the H-UDR through the new H-PCF in operation 808 includes the ANDSP support information of the UE and/or the OS support information even though the ANDSP support information of the UE and/or the OS support information are not received from the new AMF in operation 805, the new V-PCF may determine the UE policy applying the same. For example, this corresponds to the case where the UE policy is determined in consideration that the new V-PCF receives the ANDSP support information from the UE even though the new V-PCF has not received the ANDSP support information of the UE from the UE through the AMF (conventionally, when the PCF has not received the ANDSP support information of the UE from the UE, the PCF determined the UE policy that does not apply the ANDSP). Further, when the ANDSP support information of the UE and/or the OS support information are included in the UE policy container among the information received from the old AMF through the new AMF in operation 805 (including the case where the information is received from the new H-PCF through operation 806 and operation 808) even though the ANDSP support information of the UE or the OS support information are not received from the H-UDR through the new H-PCF in operation 808, the new V-PCF may determine the UE policy applying the same.

In operation 811, the new V-PCF may transmit a UE policy control create response to the new AMF in response to the request of operation 805. The response may include at least one of the trigger information for the AMF, the PSI list, and the policy data. The PSI list and the policy data may be provided while being included in the UE policy container. The new V-PCF may provide the trigger information, PSI list, and policy data provided to the new AMF to the V-UDR to determine whether the content stored in the V-UDR should be updated, and provide the V-UDR with information provided to the new AMF according to the determination result. The V-UDR may update the information related to the UE policy stored as the information received from the new V-PCF.

In operation 812, the new AMF may provide the UE policy container received in operation 811 to the UE by using a UE configuration update procedure. Based on the content of the received UE policy container, the UE may update the stored PSI list and policy data.

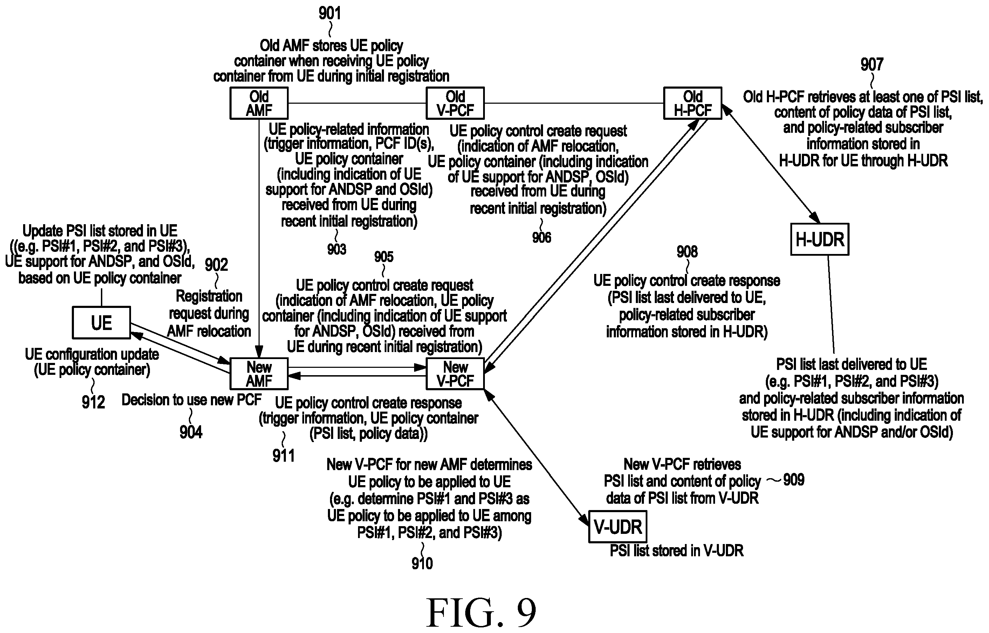

FIG. 9 is a diagram illustrating a UE policy association establishment method according to AMF relocation including a PCF change (UE policy association establishment procedure during AMF relocation with PCF change) in the roaming structure of the wireless communication according to an embodiment of the disclosure. In description of FIG. 9, the content common to the content of FIGS. 4, 6, and 7 may be omitted for convenience.

The UE may store at least one piece of the information (1) to (3) described in FIG. 4 in relation to the UE policy.

The UDR may store at least one piece of the information (I) to (III) described in FIG. 4 in relation to the UE policy.

In the 5G system roaming structure, the UE policy association establishment according to AMF relocation including the PCF change may be performed by the following procedure.

In operation 901, the old AMF may store a UE policy container which the UE provided to the network during an initial registration procedure last performed by the UE and the network. The UE policy container may include at least one piece of the information (1) to (3) described in FIG. 4.

In operation 902, the UE may transmit a registration request to the new AMF when a registration or handover procedure is required as the AMF relocation situation occurs.

In operation 903, the old AMF may provide the new AMF with information related to the UE policy when receiving a request for delivering UE context from the new AMF. Information related to the UE policy may include trigger information and/or the PCF ID of the old PCF as shown in [Table 1] above and further include the UE policy container provided by the UE during the last (recent) initial registration procedure of the UE described in operation 901. The UE policy container may include information related to ANDSP support of the UE (the indication of UE support for ANDSP) and/or information related to OS support of the UE (OSId). In the 5G roaming system, the PCF ID of the old PCF may include PCF IDs of the old V-PCF and the old H-PCF.

In operation 904, the new AMF may determine to use a new PCF that does not use the PCF ID of the old PCF received from the old AMF. When it is determined to use the new PCF, the new AMF may select the new PCF according to a PCF search and selection procedure. More specifically, the new AMF may maintain the H-PCF and determine to use a new PCF for the V-PCF. The new AMF may select a new V-PCF and perform operation 905 below. The new AMF may provide the PCF ID of the old H-PCF provided by the old AMF to the new V-PCF in operation 905 below.

In operations 905 and 906, the new AMF may make a request for establishing UE policy association when the UE policy association has not been established for the current UE with the new PCF.

Specifically, in operation 905, the new AMF may transmit a UE policy control create request to the new V-PCF. When the new AMF has never established the UE policy association for the current UE with the new V-PCF but the current core network (or the current PLMN) has previously provided the UE policy to the current UE, the new AMF may provide an indicator indicating the same to the new V-PCF. The indicator may correspond to the indicator described in operation 404 of FIG. 4. The new AMF may provide the UE policy control create request including the indicator and the old H-PCF ID described in operation 904 to the new V-PCF. Further, the new AMF may transmit a UE policy control create request including the UE policy container provided by the UE during the last (recent) initial registration procedure of the UE described in operation 903 to the new V-PCF.

In operation 906, the new V-PCF may transmit the UE policy control create request to the old H-PCF. The new V-PCF may transfer the UE policy control create request including the indicator provided by the new AMF (the indicator indicating that the new AMF has never established the UE policy association for the current UE with the new V-PCF but the current core network (or current PLMN) has previously provided the UE policy to the current UE or the indicator described in operation 404 of FIG. 4) to the old H-PCF. The new V-PCF may transfer the UE policy container provided by the UE during the last (recent) initial registration procedure of the UE received from the new AMF to the old H-PCF. When the content of the UE policy container received from the new AMF cannot be read in operation 905, the new V-PCF may transfer the same to the old H-PCF and then receive the content from the old H-PCF through operation 908 below, and the content may include ANDSP support information of the UE and/or OS support information.

In operation 907, when receiving the UE policy control create request, the old H-PCF may make a request for at least one piece of the following information (a) to (c) described in operation 405 of FIG. 4 to the H-UDR and receive the same.

When it is determined that there is the UE policy which the UE previously received from the network even though the UE policy control create request received from the new V-PCF is not a request by the initial registration of the UE, the old H-PCF may make a request for at least one of (a) to (c) described in operation 405 of FIG. 4 to the H-UDR. For example, when the UE policy container (or UE policy-related data that the UE provides to the network) is not included in the UE policy control create request, the old H-PCF may determine that it corresponds to one situation among (A) to (C) described in operation 404 of FIG. 4 and may make a request for at least one piece of the information (a) to (c) described in operation 405 of FIG. 4 to the H-UDR. In another example, when the UE policy container (or UE policy-related data that the UE provides to the network) is not included in the UE policy control create request and the indication of AMF relocation is included therein, the old H-PCF may determine that it corresponds to one situation among (A) to (C) described in operation 404 of FIG. 4 and may make a request for at least one piece of the information (a) to (c) described in operation 405 of FIG. 4 to the H-UDR.

In operation 908, the old H-PCF may transmit a UE policy control create response to the new V-PCF in response to the request of operation 906. The old H-PCF may transfer at least one piece of the information (a) to (c) received from the H-UDR to the new V-PCF. When the ANDSP support information of the UE and/or the OS support information are included in the UE policy container among the information received from the old AMF through the new V-PCF in operation 906 even though the ANDSP support information of the UE and/or the OS support information are not received from the H-UDR in operation 907, the old H-PCF may transfer the same to the V-PCF.

In operation 909, when receiving the UE policy control create request from the new AMF, the new V-PCF may make a request for at least one piece of the information (d) to (e) described in operation 508 of FIG. 5 and receive the same from the V-UDR.

In operation 910, the new V-PCF may determine the UE policy for the UE with the new AMF, based on at least one piece of the information (a) to (c) received from the old H-PCF and/or at least one piece of the information (d) to (e) received from the V-UDR. In determining the UE policy, the new V-PCF may additionally determine the information received from another UDR or the AF. For example, when the new V-PCF recognizes that PSI#1, PSI#2, and PSI#3 are installed and stored in the UE according to the information received from the H-UDR delivered from the new H-PCF in operation 908, and when it is determined that the policy corresponding to, for example, PSI#2 no longer needs to be applied to the UE according to the information received from another UDR (V-UDR or database related to other subscriber information) or the AF, the new V-PCF may reconstruct the PSI list and policy data to allow the UE to uninstall and remove PSI#2 stored in the UE and generate trigger information for the AMF corresponding thereto. In addition, when the policy-related subscription data of the information received from the H-UDR through the old H-PCF in operation 908 includes the ANDSP support information of the UE and/or the OS support information even though the ANDSP support information of the UE and/or the OS support information are not received from the new AMF in operation 905, the new V-PCF may determine the UE policy applying the same. For example, this corresponds to the case where the UE policy is determined in consideration that the new V-PCF receives the ANDSP support information from the UE even though the new V-PCF has not received the ANDSP support information of the UE from the UE through the AMF (conventionally, when the PCF has not received the ANDSP support information of the UE from the UE, the PCF determined the UE policy that does not apply the ANDSP). Further, when the ANDSP support information of the UE and/or the OS support information are included in the UE policy container among the information received from the old AMF through the new AMF in operation 905 (including the case where the information is received from the old H-PCF through operation 906 and operation 908) even though the ANDSP support information of the UE or the OS support information are not received from the H-UDR through the old H-PCF in operation 908, the new V-PCF may determine the UE policy applying the same.

In operation 911, the new V-PCF may transmit a UE policy control create response to the new AMF in response to the request of operation 905. The response may include at least one of the trigger information for the AMF, the PSI list, and the policy data. The PSI list and the policy data may be provided while being included in the UE policy container. The new V-PCF may provide the trigger information, PSI list, and policy data provided to the new AMF to the V-UDR to determine whether the content stored in the V-UDR should be updated, and provide the V-UDR with information provided to the new AMF according to the determination result. The V-UDR may update the information related to the UE policy stored as the information received from the new V-PCF.

In operation 912, the new AMF may provide the UE policy container received in operation 911 to the UE by using a UE configuration update procedure. Based on the content of the received UE policy container, the UE may update the stored PSI list and policy data.

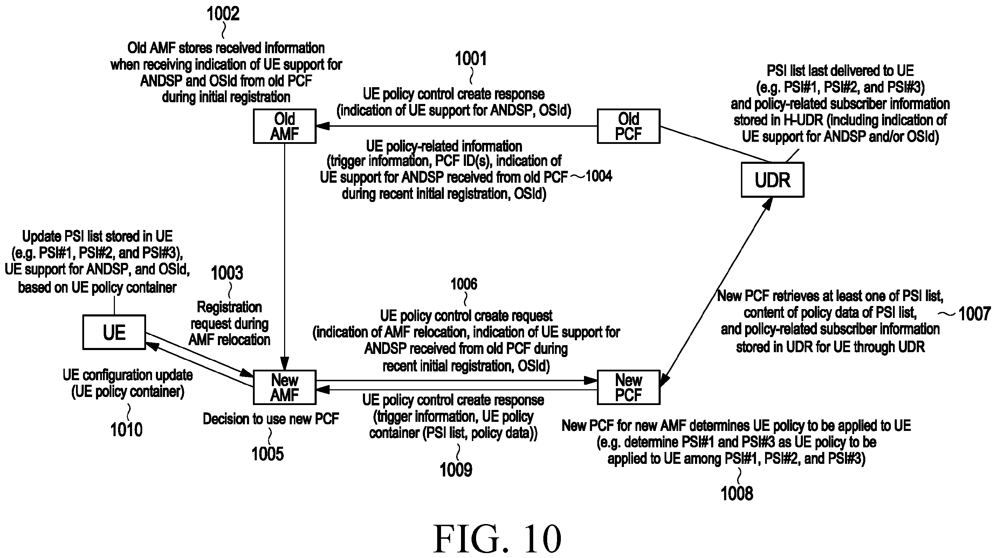

FIGS. 10 to 12 illustrate a UE policy association establishment method according to AMF relocation including a PCF change in the case where the old AMF stores ANDSP support information of the UE and/or OS support information among the content of a UE policy container which the UE provides to the network when the UE performs the initial registration procedure through the old AMF in the method described in FIGS. 7 to 9. In comparison between FIGS. 10 to 12 and FIGS. 7 to 9, there is difference in that the old PCF (or old H-PCF or old V-PCF) can transfer ANDSP support information of the UE and/or OS support information to the old AMF among the content of the UE policy container which the UE provided to the network during the last (recent) initial registration in operation 1001, operations 1101 and 1102, and operations 1201 and 1202 below, the old AMF can store ANDSP support information of the UE and/or OS support information among the content of the UE policy container which the UE provided to the network during the last (recent) initial registration in operation 1002 and operations 1203 and 1203, the old AMF can provide ANDSP support information of the UE and/or OS support information to the new AMF among the content of the UE policy container in operation 1004, operation 1105, and operation 1205 below, and ANDSP support information of the UE and/or OS support information which the old AMP provided in operation 1005 (or operations 1107 and 1108 below and operations 1207 and 1208 below) can be included in the UE policy control create request. Detailed content is described in description of each drawing. In description of FIGS. 10 to 12, the content common to those of FIGS. 4 to 9 may be omitted.

When the new PCF (FIG. 4), the new H-PCF (FIG. 5), and the new V-PCF (FIG. 6) cannot directly make a request for information to the UDR or the direct request is not appropriate among the content described in operation 405 of FIG. 4, operation 506 of FIG. 5, and operation 604 of FIG. 6, a procedure of making a request for the information to the UDR through the old H-PCF (including the old V-PCF in FIGS. 5 and 6) may also be applied to FIGS. 10 to 12.

In addition, as described in the embodiments of FIGS. 4 to 6, the method that the new PCF can determine even though the new PCF does not receive the indication from the new AMF, the method that the new H-PCF can provide the indication to the new H-PCF, based on the determination of the new V-PCF even though the new AMF does not deliver the indication to the new V-PCF in the case of roaming, and the method that can also provide the indication when new H-PCF and/or the new V-PCF transmit the request to the old H-PCF and/or old V-PCF may be applied to the embodiments of FIGS. 10 to 12 below.

FIG. 10 is a diagram illustrating a UE policy association establishment method according to AMF relocation including a PCF change (UE policy association establishment procedure during AMF relocation with PCF change) in the wireless communication according to an embodiment of the disclosure.

In operations 1001 and 1002, the old AMF may store ANDSP support information of the UE and/or OS support information among the content of the UP policy container which the UE provided to the network during the initial registration procedure last (recently) performed by the UE and the network.

Specifically, in operation 1001, the old PCF may provide the ANDSP support information of the UE and/or OS support information to the old AMF among the content of the UP policy container which the UE provided to the network during the initial registration procedure last (recently) performed by the UE and the network.

In operation 1002, the old AMF may store the ANDSP support information of the UE and/or OS support information provided from the old PCF.

The UE policy container which the old AMF provides to the new AMF and the new AMF provides to the new PCF in operations 703 to 709 described in FIG. 7 may be replaced with ANDS support information of the UE and/or OS support information in operations 1004 to 1010 of FIG. 10.

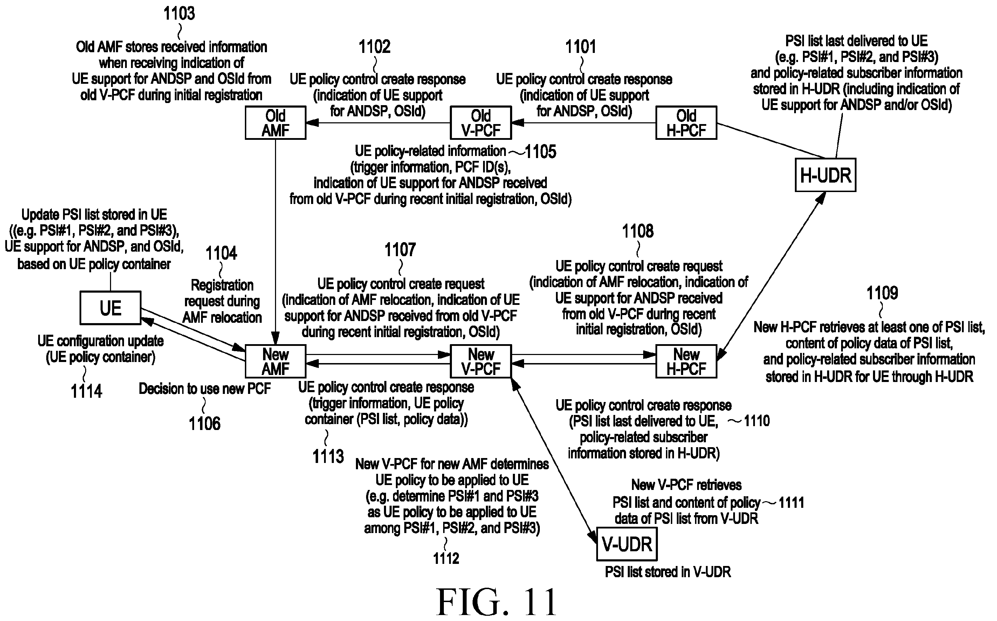

FIG. 11 is a diagram illustrating a UE policy association establishment method according to AMF relocation including a PCF change (UE policy association establishment procedure during AMF relocation with PCF change) in the roaming structure of the wireless communication according to an embodiment of the disclosure.

In operations 1101 and 1103, the old AMF may store ANDSP support information of the UE and/or OS support information among the content of the UP policy container which the UE provided to the network during the initial registration procedure last (recently) performed by the UE and the network.

Specifically, in operation 1101, the old H-PCF may provide the ANDSP support information of the UE and/or OS support information to the old V-PCF among the content of the UP policy container which the UE provided to the network during the initial registration procedure last (recently) performed by the UE and the network.

In operation 1102, the old V-PCF may transfer ANDSP support information of the UE and/or OS support information received from the old H-PCF in operation 1101 to the old AMF. When the old H-PCF does not provide the ANDSP support information and/or OS support information in operation 1101, the old V-PCF may provide the old AMF with the ANDSP support information and/or OS support information among the content of the UE policy container which the UE provided to the network during the initial registration procedure last (recently) performed by the UE and the network.

In operation 1103, the old AMF may store the ANDSP support information of the UE and/or OS support information provided from the old V-PCF.

The UE policy container which the old AMF provides to the new AMF, the new AMF provides to the new V-PCF, and the new V-PCF provides to the new H-PCF in operations 803 to 812 described in FIG. 8 may be replaced with ANDS support information of the UE and/or OS support information in operations 1105 to 1114 of FIG. 11. In operation 1108 of FIG. 11, when the new V-PCF determines whether to provide the ANDSP support information of the UE and/or OS support information to the new H-PCF, the new V-PCF may or may not consider whether the content of the ANDSP support information of the UE and/or OS support information can be read among the UE policy container provided from the new AMF (as described in operation 806 of FIG. 8).

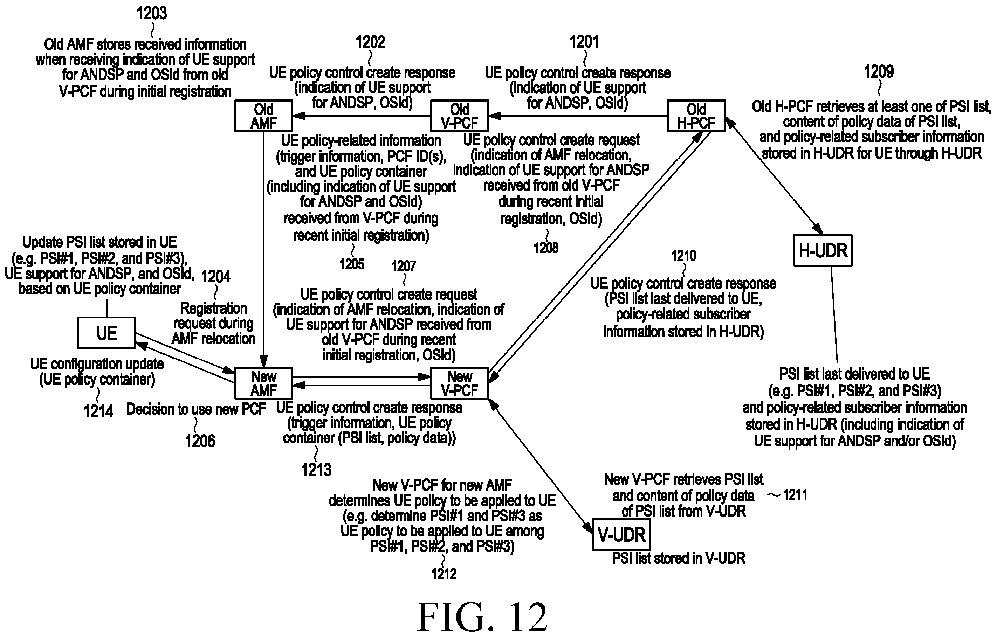

FIG. 12 is a diagram illustrating a UE policy association establishment method according to AMF relocation including a PCF change (UE policy association establishment procedure during AMF relocation with PCF change) in the roaming structure of the wireless communication according to an embodiment of the disclosure.

The UE policy container which the old AMF provides to the new AMF, the new AMF provides to the new V-PCF, and the new V-PCF provides to the old H-PCF in operations 903 to 912 described in FIG. 9 may be replaced with ANDS support information of the UE and/or OS support information in operations 1205 to 1214 of FIG. 12. In operation 1208 of FIG. 12, when the new V-PCF determines whether to provide the ANDSP support information of the UE and/or OS support information to the old H-PCF, the new V-PCF may or may not consider whether the content of the ANDSP support information of the UE and/or OS support information can be read among the UE policy container provided from the new AMF (as described in operation 906 of FIG. 9).

Names of the procedures or messages exemplified in FIGS. 4 to 12 are not limited thereto. For example, the UE policy association establishment procedure may be replaced with a UE policy association update procedure which may be used in some or all of the procedures described in FIGS. 4 to 12. For example, the UE policy control create request/response may be replaced with a UE policy control update request/response which may be used in some or all of the procedures described in FIGS. 4 to 12.

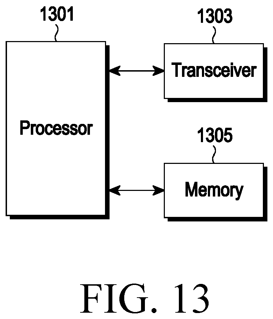

FIG. 13 is a diagram illustrating an example of a configuration of a network entity in the wireless communication system according to an embodiment of the disclosure.

The network entity of FIG. 13 may be one of network functions (NFs) such as the UE, RAN (base station), AMF, PCF, and UDR described in the embodiments of the FIGS. 1 to 12.

The network entity according to an embodiment of the disclosure may include a processor 1301 configured to control the overall operation of the network entity, a transceiver 1303 including a transmitter and a receiver, and memory 1305. Of course, the disclosure is not limited to the example, and the network entity may include more elements or fewer elements than those illustrated in FIG. 13.

According to an embodiment of the disclosure, the transceiver 1303 may transmit and receive signals to and from at least one of other network entities or the UE. The transmitted and received signals may include at least one of control information and data. When the network entity of FIG. 13 is an entity of the core network, a signal transmitted and received between the network entity and the UE may be transmitted and received via the RAN.

According to an embodiment of the disclosure, the processor 1301 may control the overall operation of the corresponding network entity so that the operation according to a combination of two or more of the embodiments of FIGS. 1 to 12 is performed. Meanwhile, the processor 1301, the transceiver 1303, and the memory 1305 are not necessarily implemented by separate modules but may be implemented as one element in the form of a single chip. In addition, the processor 1301 may be an application processor (AP), a communication processor (CP), a circuit, an application-specific circuit, or at least one processor. The transceiver 1303 may include at least one communication interface configured to transmit and receive a signal to and from another network entity wiredly/wirelessly.

According to an embodiment of the disclosure, the memory 1305 may store data such as a basic program for the operation of the corresponding network entity, an application program, and configuration information. Further, the memory 1305 provides the stored data according to a request of the processor 1301. The memory 1305 may be configured by a storage medium such as ROM, RAM, hard disks, CD-ROMs, and DVDs, or a combination of the storage media. The number of memories 1305 may be plural. The processor 1301 may perform at least one of the embodiments, based on a program for performing an operation according to at least one the embodiments of the disclosure stored in the memory 1305.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

The embodiments of the disclosure described and shown in the specification and the drawings are merely particular examples that have been presented to easily explain the technical contents of the disclosure and help understanding of the disclosure, and are not intended to limit the scope of the disclosure. Therefore, the scope of various embodiments of the disclosure should be construed to include, in addition to the embodiments set forth herein, all changes and modifications derived based on the technical idea of various embodiments of the disclosure. Also, the above respective embodiments may be employed in combination, as necessary.

## Claims

1. A method of providing UE policy information by a first access and mobility management function (AMF) managing mobility of a user equipment (UE) in a wireless communication system, the method comprising:
in case that a situation of AMF relocation occurs, receiving, by the first AMF, a registration request from the UE during the AMF relocation;
receiving, by the first AMF, UE policy-related information from a second AMF managing mobility of the UE before the AMF relocation;
transmitting, by the first AMF, a request message comprising information indicating the AMF relocation to a first policy control function (PCF) managing the UE policy information after the AMF relocation;
receiving, by the first AMF, a response message comprising the UE policy information to be applied to the UE after the AMF relocation from the first PCF; and
transmitting, by the first AMF, the UE policy information to the UE.

2. The method of claim 1, wherein, in case that the UE is roaming from a home network to a visited network, the first PCF is a PCF in the visited network after the AMF relocation, and
wherein the transmitting of the request message comprises transmitting the request message comprising information indicating the AMF relocation and identification information for a second PCF in the home network after the AMF relocation, and the UE policy information to be applied to the UE is based on information provided through the second PCF.

3. The method of claim 1, wherein, in case that the UE is roaming from a home network to a visited network, the first PCF is a PCF in the visited network after the AMF relocation, and
wherein the transmitting of the request message comprises transmitting the request message comprising information indicating the AMF relocation and identification information for a third PCF in the home network before the AMF relocation, and the UE policy information to be applied to the UE is based on information provided through the third PCF.

4. The method of claim 1, wherein the UE policy-related information comprises at least one of information related to access network discovery and selection policy (ANDSP) support of the UE and information related to operating system support of the UE, and is stored in the second AMF during a recent initial registration procedure of the UE.

5. The method of claim 4, wherein, in case that the UE is roaming from a home network to a visited network, the first PCF is a PCF in the visited network after the AMF relocation, and
wherein the transmitting of the request message comprises transmitting the request message comprising information indicating the AMF relocation and the UE policy-related information.

6. The method of claim 4, wherein the UE policy-related information received by the first AMF is provided from the UE to the second AMF during the recent initial registration procedure of the UE.

7. The method of claim 4, wherein the UE policy-related information received by the first AMF is provided from a PCF, which is configured to provide a service to the UE before the AMF relocation, to the second AMF during the recent initial registration procedure of the UE.

8. A first access and mobility management function (AMF) managing mobility of a UE in a wireless communication system, the first AMF comprising:
a transceiver; and
a processor configured to:
in case that a situation of AMF relocation occurs, receive, by the first AMF, a registration request from the user equipment (UE) through the transceiver during the AMF relocation;
receive, by the first AMF, UE policy-related information from a second AMF managing mobility of the UE before the AMF relocation, through the transceiver;
transmit, by the first AMF, a request message comprising information indicating the AMF relocation to a first policy control function (PCF) managing the UE policy information after the AMF relocation, through the transceiver;
receive, by the first AMF, a response message comprising the UE policy information to be applied to the UE after the AMF relocation from the first PCF through the transceiver; and
transmit, by the first AMF, the UE policy information to the UE through the transceiver.

9. The first AMF of claim 8, wherein, in case that the UE is roaming from a home network to a visited network, the first PCF is a PCF in the visited network after the AMF relocation, and
wherein the processor is configured to transmit the request message comprising information indicating the AMF relocation and identification information for a second PCF in the home network after the AMF relocation through the transceiver, and the UE policy information to be applied to the UE is based on information provided through the second PCF.

10. The first AMF of claim 8, wherein, in case that the UE is roaming from a home network to a visited network, the first PCF is a PCF in the visited network after the AMF relocation, and
wherein the processor is configured to transmit the request message comprising information indicating the AMF relocation and identification information for a third PCF in the home network before the AMF relocation through the transceiver, and the UE policy information to be applied to the UE is based on information provided through the third PCF.

11. The first AMF of claim 8, wherein the UE policy-related information comprises at least one of information related to access network discovery and selection policy (ANDSP) support of the UE and information related to operating system support of the UE, and is stored in the second AMF during a recent initial registration procedure of the UE.

12. The first AMF of claim 11, wherein, in case that the UE is roaming from a home network to a visited network, the first PCF is a PCF in the visited network after the AMF relocation, and
wherein the processor is configured to transmit the request message comprising information indicating the AMF relocation and the UE policy-related information through the transceiver.

13. The first AMF of claim 11, wherein the UE policy-related information received by the first AMF is provided from the UE to the second AMF during the recent initial registration procedure of the UE.

14. The first AMF of claim 11, wherein the UE policy-related information received by the first AMF is provided from a PCF, which is configured to provide a service to the UE before the AMF relocation, to the second AMF during the recent initial registration procedure of the UE.
